# EUROPEAN PATENT APPLICATION

(11) **EP 2 667 492 A2**
(43) Date of publication of application: **27.11.2013**
(21) Application number: 13167692.6
(22) Date of filing: 14.05.2013
(51) Int. Cl.: H02K 5/173

(54) **Motor spindle fixture**

(30) Priority: 23.05.2012 TW 101209814
(71) Applicant: Thunder Tiger Corporation, Taichung City (TW)
(72) Inventor: Lai, Aling, Taichung City (TW)
(74) Representative: Strehl Schübel-Hopf & Partner

(57) **Abstract**

A motor spindle fixture includes a fixing base (1), a motor (2) and a casing (3). The motor (2) includes a main body (21) and a spindle (22) penetrating through the main body (21) and protruding from both ends of the main body (21). The spindle (22) has an end defined as a driving end (221) for driving an external device and another end defined as a fixing end (222). The motor (2) is pivotally mounted onto the fixing base (1) through the driving end (221) of the spindle (22). The casing (3) is mounted onto the fixing base (1) and has an accommodating space (31) for accommodating the motor (2), and a chamber (332) concavely formed on a sidewall of the casing (3) and corresponding to the fixing end (222) of the spindle (22). The chamber (332) includes a fixing element, and the fixing end (222) of the spindle (22) is extended into the chamber (332) and pivotally coupled to the fixing element for fixing the spindle (22), and preventing the spindle (22) from being damaged by external impact forces during the operation of the motor (2).

## Description

### FIELD OF THE INVENTION

The present invention relates to a motor structure, in particular to a fixture for fixing a motor spindle.

### BACKGROUND OF THE INVENTION

In general, a bearing of a conventional outrunner brushless motor is usually designed and supported at a stator end, and a rotor end (which includes a spindle of the motor) is lacking supporting components, and thus the spindle of the motor may be damaged easily by factors such as external impacts or forces.

In view of the aforementioned problem, it is a main subject of the present invention to overcome such problem, and the inventor of the present invention based on years of experience in the related industry and conducted extensive researches and experiments, has finally developed the motor spindle fixture of the present invention to overcome the aforementioned problem of the prior art.

### SUMMARY OF THE INVENTION

It is a primary objective of the present invention to provide a motor spindle fixture having a casing for fixing components of the motor to prevent them from being damaged during the operation of the motor.

To achieve the aforementioned objective, the present invention provides a motor spindle fixture, comprising: a fixing base, having a through hole; a motor, having a main body and a rotatable spindle penetrating through the main body and protruding from both ends of the main body, wherein an end of the spindle is defined as a driving end for driving an external device, and the other end of the spindle is defined as a fixing end, and the motor is installed on the fixing base, and the driving end of the spindle is passed through the through hole of the fixing base; a casing, mounted onto the fixing base, and having an accommodating space formed therein for accommodating the motor, wherein the casing has a chamber concavely formed on a sidewall of the casing and at a position corresponding to the fixing end of the spindle, and the chamber includes a fixing element therein, and the fixing end of the spindle is extended into the chamber and pivotally coupled to the fixing element.

### BRIEF DESCRIPTION OF THE DRAWINGS

FIG. 1 is a perspective view of the present invention;

FIG. 2 is an exploded view of the present invention; and

FIG. 3 is a cross-sectional view of the present invention.

### DESCRIPTION OF THE PREFERRED EMBODIMENTS

The aforementioned and other objectives and advantages of the present invention will become clearer in light of the following detailed description of an illustrative embodiment of this invention described in connection with the drawings. It is intended that the embodiments and drawings disclosed herein are to be considered illustrative rather than restrictive.

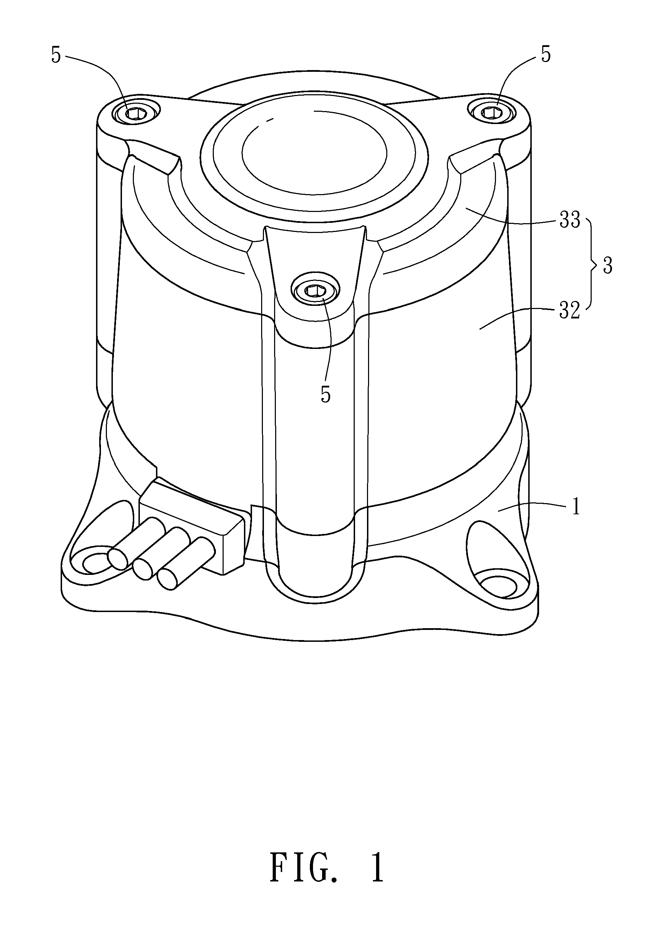

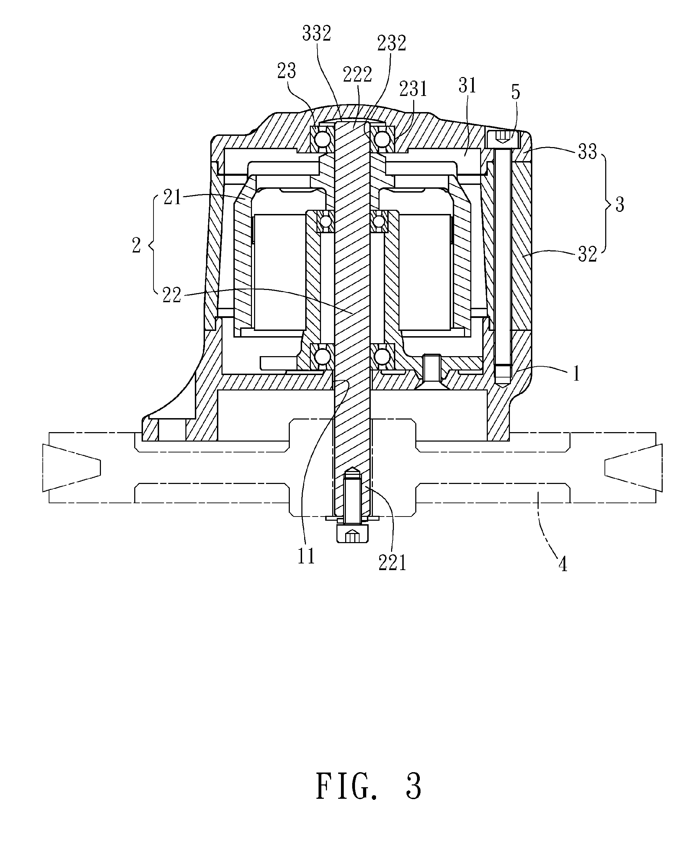

With reference to FIGS. 1 to 3 for a motor spindle fixture of the present invention, the motor spindle fixture comprises a fixing base 1, a motor 2 and a casing 3, wherein the fixing base 1 as shown in FIG. 3 is mounted onto an external device 4 driven by the motor 2, and the fixing base 1 has a through hole 11 formed at the central position of the fixing base 1.

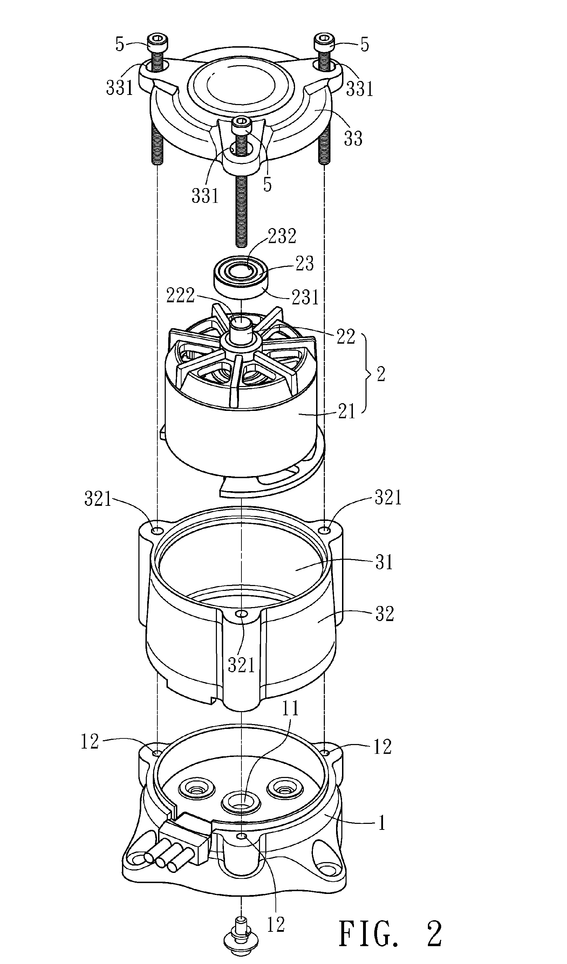

In FIGS. 2 and 3, the motor 2 of this preferred embodiment is an outrunner brushless motor having a main body 21 and a rotatable spindle 22 penetrating through the main body 21 and protruding from both ends of the main body 21, wherein an end of the spindle 22 is defined as a driving end 221 for driving of an external device 4, and the other end of the spindle 22 is defined as a fixing end 222, and the driving end 221 of the spindle 22 of the motor 2 is passed downwardly into the through hole 11 of the fixing base 1 and further extended out of the through hole 11 and installed to the external device 4 for driving the external device 4. The casing 3 includes an accommodating space 31 formed therein, and the casing 3 of this preferred embodiment includes a cylindrical sidewall 32 having upper and lower openings formed at upper and lower ends respectively and a top cover 33 installed at the upper opening, and the cylindrical sidewall 32 and the top cover 33 are enclosed to form the accommodating space 31. The casing 3 comprised of the top cover 33 and the sidewall 32 are downwardly covered onto the fixing base 1 and the accommodating space 31 of the casing is provided for accommodating the motor 2, wherein the top cover 33, the sidewall 32 and the fixing base 1 have a plurality of corresponding locking holes 331, 321, 12 for passing the top cover 33 into the locking hole 331 by the locking element 5 and through the locking hole 321 of the sidewall 32, and finally locked to the locking hole 12 of the fixing base 1 in order to fix the top cover 33, the sidewall 32 and the fixing base 1

Further, a chamber 332 is concavely formed on the bottom of the top cover 33 and at a position corresponding to the fixing end 222 of the spindle 22, and the chamber 332 includes a fixing element therein, and the fixing end 222 of the spindle 22 is upwardly extended into the chamber 332 and pivotally coupled to the fixing element. In this preferred embodiment, the fixing element is a bearing 23, and an outer ring 231 of the bearing 23 is fixed into the chamber 332, and the fixing end 222 of the spindle 22 is upwardly coupled into a rotatable inner ring 232 of the bearing 23.

In the aforementioned components of the present invention, the fixing base 1 is fixed with respect to the spindle 22 of the motor 2, and the casing 3 comprised of a cylindrical sidewall 32 and a top cover 33 is secured to the fixing base 1, so that the casing 3 is a relatively fixed part, and the spindle 22 of the casing 3 can be secured by connecting the bearing 23, so that the support of the spindle 22 can be enhanced. In addition, the bearing 23 can absorb impacts produced by the external forces exerted onto the spindle 22 to minimize the chance of damaging the spindle 22.

In summation of the description above, the present invention improves over the prior art, and is thus duly filed for patent application. While the invention has been described by means of specific embodiments, numerous modifications and variations could be made thereto by those skilled in the art without departing from the scope of the invention set forth in the claims.

## Claims

1. A motor spindle fixture, comprising:
a fixing base (1) having a through hole (11);
a motor (2) having a main body (21) and a rotatable spindle (22) penetrating through the main body (21) and protruding from both ends of the main body (21), wherein an end of the spindle (22) is defined as a driving end (221) for driving an external device (4), and the other end of the spindle (22) is defined as a fixing end (222), and the motor (2) is installed onto the fixing base (1) and the driving end (221) of the spindle (22) of the motor (2) is passed through the through hole (11) of the fixing base (1);
a casing (3), mounted onto the fixing base (1), and having an accommodating space (31) formed therein for accommodating the motor (2), wherein the casing (3) includes a chamber (332) concavely formed on a sidewall of the casing (3) and at a position corresponding to the fixing end (222) of the spindle (22), and the chamber (332) includes a fixing element therein, and the fixing end (222) of the spindle (22) is extended into the chamber (332) and pivotally coupled to the fixing element.

2. The motor spindle fixture of claim 1, wherein the casing (3) includes a cylindrical sidewall (32) having upper and lower openings formed at upper and lower ends respectively, and a top cover (33) installed at the upper opening, and the top cover (33), the sidewall (32) and the fixing base (1) have a plurality of corresponding locking holes (331, 321, 12) for locking a locking element (5) to each locking hole (331, 321, 12) in order to fix the top cover (33), the sidewall (32) and the fixing base (1), wherein the chamber (332) is disposed at the bottom of the top cover (33) and corresponding to the fixing end (222) of the spindle (22).

3. The motor spindle fixture of claim 1, wherein the fixing element is a bearing (23).
